# EUROPEAN PATENT APPLICATION

(11) **EP 1 575 267 A1**
(43) Date of publication of application: **14.09.2005**
(21) Application number: 05101473.6
(22) Date of filing: 25.02.2005
(51) Int. Cl.: H04N 5/225, G03B 17/48

(54) **A camera apparatus**

(30) Priority: 10.03.2004 KR 2004016025
(71) Applicant: SAMSUNG ELECTRONICS CO., LTD., Gyeonggi-Do 442-742 (KR)
(72) Inventor: Park, Kwang-hyok, Yeongtong-gu, Suwon-si, Gyeonggi-do (KR)
(74) Representative: Geary, Stuart Lloyd

(57) **Abstract**

A front case of an image photographing apparatus has two lenses fixed on one side of a main body case so that the entire apparatus is minimized in size. The front case of the image photographing apparatus has a main body case receiving a first camera part having a first lens for photographing a moving image and a second camera part having a second lens for photographing a still image. The front case also includes a housing assembled to a front side of the main body case, and first and second holes formed on the housing front side to expose one of the first lens and second lens.

## Description

The present invention relates to a camera apparatus having a body housing a camcorder image capture unit and a still camera capture unit.

Image photographing apparatuses (or camera apparatuses) can be divided into either a camera for capturing a still image or a camcorder for capturing moving images. The camera and camcorder have been separately developed and sold based on their own functional characteristics. Accordingly, a user has to separately buy both a camera and a camcorder, if they wish to photograph both still and moving images. If the user wishes to capture a still image, the user uses a camera. However, if the user wishes to capture a moving image, the user uses a camcorder. Consequently, it is both cumbersome and expensive to carry and buy both a camera and a camcorder.

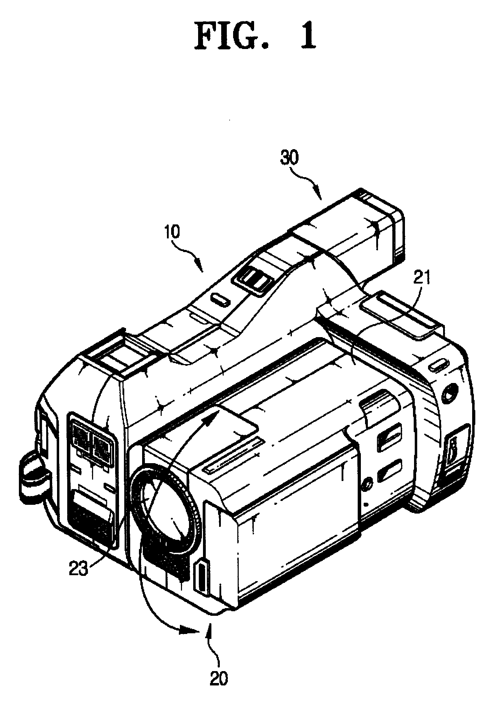

To address the aforementioned drawbacks, Figure 1 shows preferred embodiments of the present invention which integrally combine both a camera and camcorder.

Referring to Figure 1, a known camera apparatus comprises a main body 10 on which a tape cassette for recording moving and still images and a flash memory are mounted. The cassette tape and the flash memory can be loaded or removed from the body 10. Camera unit 20 has a camcorder part for capturing moving images and a camera part for capturing still images. A display device is provided for displaying moving or still images captured using the camera unit 20. A control part is also provided for controlling each part so that a moving image or a still image is captured.

The main body 10 has a camera unit 20 comprising a housing 21 mounted by a hinge on one side of the main body 10, a camcorder part 30 and a camera part formed in the housing 21. Additionally, a lens 23 of the camcorder part 30 and a lens (not shown) of the camera part are arranged at opposite ends of the main body 10. More specifically, the lens of camcorder part and the lens of camera part are arranged on the housing 21 about 180 degrees apart from one another so as to point in opposite directions. A mode sensor is formed between the main body 10 and the housing 21 which senses the rotation of housing 21. The mode sensor recognises which lens is selected. The control part determines whether the camera part lens faces front or the camcorder part lens faces front, using the mode sensor. Accordingly, a user selects either the camera or the camcorder by rotating the housing 21 relative to the main body 10 by 180 degrees in the direction of the arrow shown in Figure 1. Therefore, the user can capture still or moving images according to the selection. The camera apparatus allows a user to only buy and carry a single device which can be used to capture both still and moving images.

However, in the known integral camera apparatus, a user must rotate the housing 21 by 180 degrees to select and use either one of the camcorder part or the camera part, and therefore, operability deteriorates and the it is difficult to reduce the size of the camera.

Accordingly, there is a need for a camera apparatus which can capture moving or still images and which the size of the apparatus is reduced by fixing two lenses on the main body case.

An object of the present invention is to address at least the above problems and/or disadvantages and to provide at least the advantages described below. Accordingly, an object of the present invention is to provide a front case of a camera apparatus having a lens for camera and a lens for camcorder facing the same direction, and the front case can be integrally attached to a front side of a main body case, such that the size of the camera apparatus is reduced.

The present invention relates to a camera apparatus having body housing a camcorder image capture unit and a still camera capture unit.

The present invention is characterised in that the body has a front panel having first and second apertures located therein to provide respective light paths to the camcorder image capture unit and the still camera image capture unit.

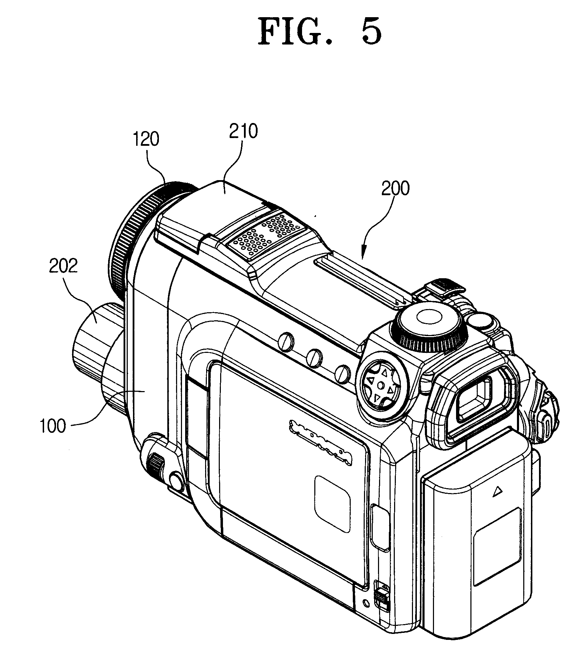

An embodiment of the present invention will now be described, by way of example only, and with reference to Figures 2 to 5 of the accompanying drawings, in which:
Figure 1 is a perspective view of a known camera apparatus;
Figure 2 is an elevation of a front case of a camera apparatus according to an embodiment of the present invention;
Figure 3 is an exploded perspective view of the front case of the camera apparatus shown in Figure 2;
Figure 4 is a perspective view of the front case assembled to a main body case of the camera apparatus shown in Figure 2; and
Figure 5 is a perspective view of an example of the camera apparatus shown in Figure 2 assembled by the front case.

Throughout the drawings, the same drawing reference numerals will be understood to refer to the same elements, features, and structures. Also, descriptions of known functions and constructions are omitted for conciseness.

A front case 100 of a camera apparatus according to an embodiment of the present invention comprises a housing 110 located in a main body case 200. Two holes 111, 112 are formed on the front side 110a of the housing 110 and are spaced by a distance. The housing 110 may be formed in various shapes depending on the shape of the main body case 200. The two holes 111, 112 may be formed in different shapes according to the lens sizes used.

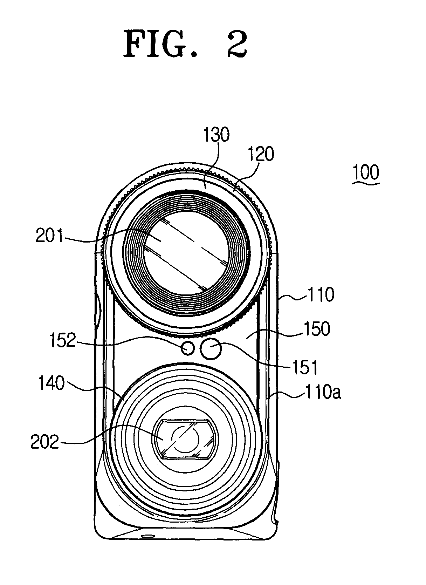

Referring to Figures 2 to 4, the front case 100 comprises a housing 110 located in a main body case 200 of the camera apparatus. A first hole 111 and a second hole 112 are formed on the front side 110a of the housing 110 and are spaced apart.

The housing 110 is preferably formed in the shape of a hollow receptacle having a substantially squared front side 110a. The housing 110 is preferably formed by injection moulding. A first hole 111 and a second hole 112 are located on the front side 110a of the housing 110.

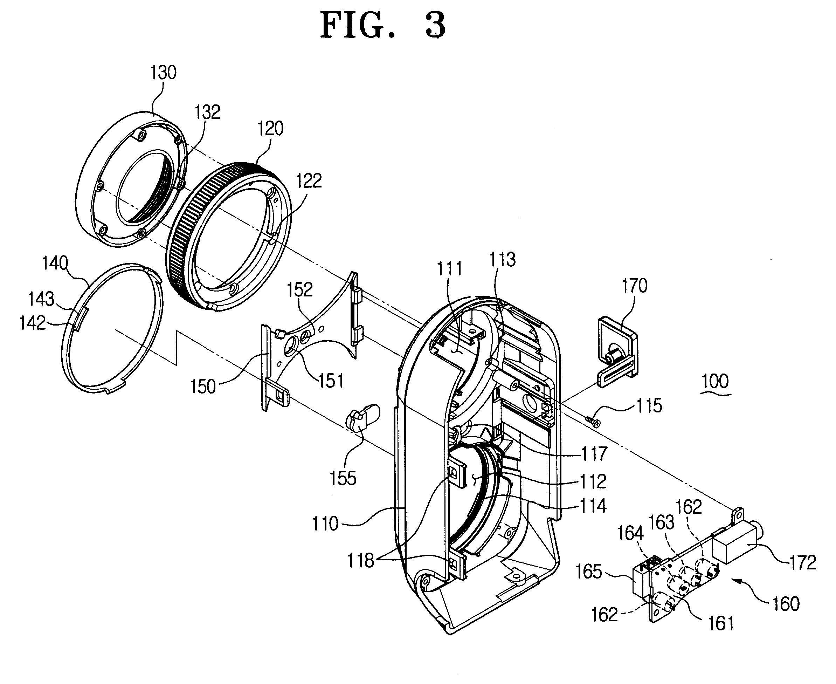

The first hole 111 is formed so the first lens hood 120 is assembled so that the front lens hood 120 corresponds to the first lens 201, and that the lens is for a camcorder to capture moving images. The first lens hood 120 is fixed over the first hole 111 of the housing 110 by a hood holder 130. Referring to Figure 3, a plurality of bolt holes 113 are formed around the first hole 111 of the housing 110. The bolt holes are for fixing the hood holder 130. A plurality of taps 132 are formed around the hood holder 130, and the taps correspond to the plurality of bolt holes 113. A plurality of holes 122 are formed around the first lens hood 120 and the holes correspond to the plurality of taps 132 so that the holes expose the plurality of taps 132 of the hood holder 130. Accordingly, after the first lens hood 120 is inserted in the hood holder 130 and connected by bolts 115 through the bolt holes 113, the first lens hood 120 is fixed to the housing 110 of the front case 100. The hood holder 130 and bolt 115 are merely used to describe the structure for fixing the first lens hood 120 to the housing 110; however, it should be understood that other suitable structures and arrangements can equally be used.

The second hole 112 is formed so that the second lens hood 140 corresponds to the second lens 202 for a capturing a still image. A plurality of projection parts 114 extend into the second hole 112 so that the second lens hood 140 can be secured. The projection parts 114 are located at equal distance around the second hole 112, which in the case of three projection part 114 is about 120 degrees from each other. A plurality of fixing parts 142 extend around the surface of the second lens hood 140 in the direction of insertion to the second hole 112. The size of fixing parts 142 corresponds to the spacing between the projection parts 114 around the second hole 114. A fixing groove 143 is formed at the outer circumference of each of the fixing parts 142 to receive the projection parts 114 of the second hole 112. After the fixing parts 142 of the second lens hood 140 are inserted between the projection part 114 of the housing, the second lens hood 140 is rotated in a certain direction. Thus, the projection part 114 of the second hole 112 locates in the fixing groove 143 of the fixing parts 142. Therefore, the second lens hood 140 is fixed to the front case 100. The fixing groove 143 and the projection part 114 are merely used to describe the structure for fixing the second lens hood 140 to the main body 100. It should be understood that any other suitable known structures and arrangements may be used to connect or fasten the second lens hood 140 to the housing 110.

A sensor receiving part 117 is located between the first hole 111 and the second hole 112 on the housing front side 110a. The sensor receiving part 117 receives a sensor used for the camera apparatus. The sensor receiving part 117 is preferably formed in the shape of a hole to align with the number and size of a plurality of sensors used for the camera apparatus. A sensor assembly 160 comprises two infrared LEDs 162, an illumination sensor 163, an auxiliary illumination LED 164, and a remote control sensor 165 on one circuit board 161 each separated suitable spacing. If the circuit board 161 of the sensor assembly 160 is fixed to the housing 110, each sensor and each LEDs 161, 163, 164 and 165 radiates through the penetrating hole of the sensor receiving part 117 when operated. A blocking board 150 is attached to the housing front side 110a and is in alignment with the sensor receiving part 114 of the housing 110 for covering the penetrating hole of the sensor receiving part 117. The blocking board 150 preferably is made of an opaque plastic so as not to show the sensor and LEDs 162, 163, 164 and 165 of the sensor assembly 160. However, any suitable plastic capable of allowing infrared to pass therethrough may be used. Penetrating holes 151 and 152 are preferably formed on the blocking board 150 so as to align with the auxiliary illumination LED 164 and the illumination sensor 163. Thus, emission of the light from the auxiliary illumination LED 164 and the illumination sensor 163 is not obstructed. A transparent window is preferably formed in the penetrating holes of the blocking board 150 and the housing 110 to support movement of the auxiliary illumination LED 164 and the illumination sensor 163.

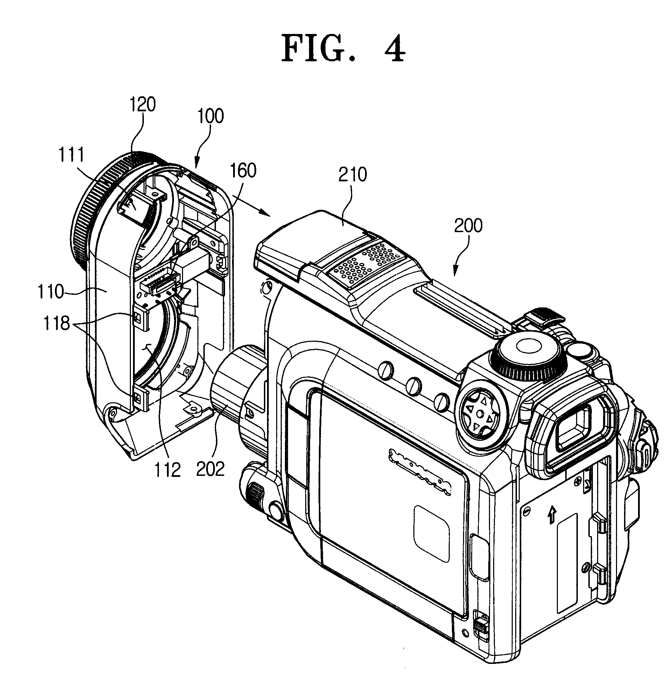

As shown in Figure 4, a plurality of connecting parts 118 are formed at the rear of the housing 110 to attach the front case 100 to the fixing end 210 of the main body case 200. The upper side of the housing 110 is partially removed to receive flash 210.

A microphone jack or earphone jack 172 may be mounted on the housing 110. A jack cover 170 is located on one side of the housing 110 to cover the connecting part of the jack 172. The jack cover 170 can be opened by a user to connect a jack when required.

The assembly process of locating the front case on the camera apparatus and operation thereof will be described in greater detail with reference to the accompanying drawings.

First, the blocking board 150 is attached to the front side 110a of the housing 110. The hood holder 130 is inserted in the first lens hood 120. The hole 122 of the first lens hood 120 preferably engages a plurality of tap holes 132 of the hood holder 130. Then, the hood holder 130 is placed over the first hole 111 to align with the tap holes 132 of the hood holder 130. Furthermore, the bolt hole 113 located around the outside of the first hole 111, and the hood holder 130 is fixed to the housing 110 by the bolt/screw 115. Lastly, the fixing part 142 of the second lens hood 140 engages the protrusion parts 114 of the second hole 112. The second lens hood 140 is inserted into the second hole 112, and then rotated by a predetermined distance. The protrusion parts 114 of the second hole 112 are inserted into the fixing groove 143 of the fixing part 142 so that the second lens hood 140 is fixed to the housing 110. By the above assembly process, the first and second lens hoods 120 and 140, and the blocking board 150 are attached to the housing. The front case 100 of the camera apparatus is now complete. When the connecting parts 118 of the housing 110 of the assembled front case 100 are attached to a fixing opening of the main body case 200 as shown in Figure 4, the camera apparatus is completely assembled.

Since, as described above, hoods for the camera lens and the camcorder lens are attached to the integrally-formed front case, the size of the camera apparatus is minimised.

Additionally, since a plurality of sensors for the camera apparatus are fixed between two lens holes of the front case, the size of the camera is further reduced.

## Claims

1. A camera apparatus having a body (200) housing a camcorder image capture unit and a still camera capture unit, **characterised in that** the body (200) has a front panel (110) having first and second apertures (111,112) located therein to provide respective light paths to the camcorder image capture unit and the still camera image capture unit.

2. A front case of an image photographing apparatus which has a main body case receiving a first camera part having a first lens for photographing a moving image and a second camera part having a second lens for photographing a still image, the front case comprising:
a housing assembled to a front side of the main body case; and
a first hole and a second hole formed on the housing front side to expose the first lens and second lens.

3. The front case according to claim 2, wherein
a first lens hood and a second lens hood are assembled to the first and second holes, respectively.

4. The front case according to claim 3, wherein
the first lens is exposed through the first hole, and the second lens is exposed through the second hole.

5. The front case according to claim 4, wherein
the first lens hood assembled to the first hole further comprises a hood holder.

6. The front case according to claim 2, wherein
a sensor receiving part is formed between the first hole and the second hole on a front side of the housing.

7. The front case according to claim 6, wherein
a blocking board is located on the sensor receiving part of the housing to cover the sensor receiving part.

8. The front case according to claim 6, wherein
the sensor receiving part is arranged to house an infrared ray LED, an illumination sensor, an auxiliary illumination LED and a remote control sensor.

9. The front case according to claim 2, wherein
a jack cover is openly formed on one side of the housing to expose a jack installed on the housing.

10. A front case of an image photographing apparatus which has a main body case receiving a first camera part having a first lens for photographing a moving image and a second camera part having a second lens for photographing a still image, the front case comprising:
a housing assembled to a front side of the main body case; and
a first hole and a second hole formed on the housing front side to expose the first lens and second lens; and
a first lens hood and a second lens hood are assembled to the first and second holes, respectively, and the first lens hood includes a hood holder.

11. The front case according to claim 10, wherein
the first lens is exposed through the first hole, and the second lens is exposed through the second hole.

12. The front case according to claim 10, wherein
a sensor receiving part is formed between the first hole and the second hole on a front side of the housing.

13. The front case according to claim 12, wherein
a blocking board is located on the sensor receiving part of the housing to cover the sensor receiving part.

14. The front case according to claim 12, wherein
the sensor receiving part is arranged to house an infrared ray LED, an illumination sensor, an auxiliary illumination LED and a remote control sensor.

15. The front case according to claim 10, wherein
a jack cover is openably formed on one side of the housing to expose a jack installed on the housing.
